# EUROPEAN PATENT APPLICATION

(11) **EP 1 930 603 A1**
(43) Date of publication of application: **11.06.2008**
(21) Application number: 06380316.7
(22) Date of filing: 05.12.2006
(51) Int. Cl.: F15B 1/24, F24D 3/10

(54) **Expansion vessel**

(71) Applicant: Dendanet, S.L., 08009 Barcelona (ES)
(72) Inventor: Garcia-Verdugo, Alberto, 48950 Erandio-Bizkaia (ES)
(74) Representative: Carvajal y Urquijo, Isabel

(57) **Abstract**

The present invention relates to an expansion vessel that can be applied, for example, to heating systems or fluid pumping systems as well as thermal solar energy circuits, and it consists of a tubular body (1) that is closed on at least one of its ends by means of a cover (2) and inside which there is a plunger (5) creating with said cover (2) a single chamber (7) connected to the closed heating circuit, such that when the temperature increases in said circuit and the water expands, this in turn causes an increase in the chamber (7) absorbing the surplus due to the retraction of the plunger (5) against a spring (6) also housed inside the cylindrical body (1) and resting on a second cover (3) opposite to the first one.

This special shape allows considerably increasing the amount of water that the expansion vessel is able to receive for a determined pre-established volume.

## Description

### OBJECT OF THE INVENTION

The present invention relates to an expansion vessel, i.e. to a vessel that is able to house therein a certain amount of a fluid housed in a circuit, which can be a closed circuit, when excess pressure occurs in the circuit due to an increase in the volume of the fluid, which expands due to the increase in the temperature. The expansion vessel counteracts said excess pressure, preventing the risks that may result from such pressure and reintegrates the liquid to the circuit when the conditions thereof allow it, i.e. when a reduction in said pressure occurs, for example due to a cooling of the liquid.

The invention is specifically focused on an accumulator or expansion vessel which, with a very simple structure, allows attaining optimal results as it is carried out in a single-chambered vessel, its volume being considerably reduced in comparison with conventional expansion vessels.

The invention is particularly applicable in the field of heating installations and in solar energy installations, but is can also be applied to any other industrial field in which similar features are required, such as water accumulators.

### BACKGROUND OF THE INVENTION

As is known, both hydropneumatic accumulators and expansion vessels consist of containers accumulating water to then return it to the circuit. While accumulators are normally used in cold water installations to accumulate a certain amount of water which prevents the pump connected to the circuit from working continuously, expansion vessels, which are virtually identical in concept, are used in closed circuit systems, such as for example in a heating system, such that when the water is heated, it expands, increasing the total volume of the circuit and the expansion vessel absorbs the volume of water produced by said heating.

Expansion vessels have two chambers separated by a membrane, acting as a diaphragm, such that when one of said chambers is connected to the closed circuit, and when the water is heated, and accordingly expands, said chamber increases its volume by a magnitude suitable for receiving the necessary amount of water to maintain the pressure in the closed circuit, which volume increase of said chamber occurs at the expense of the complementary volume reduction in the chamber defined on the other side of the membrane. In this second chamber there is compressed air (nitrogen in some cases because it is a less permeable gas for the rubber membrane), but the reduction of the volume of the gas makes the pressure increase exponentially, therefore there will come a time when the pressure of the system triggers the safety valve, thus losing two thirds of the vessel's capacity.

The expansion vessel is pressurized at a pressure determined by the system in which it is incorporated, usually between 0.8 and 1.2 bar, slightly above the cold circuit pressure and the volume increase of the proximal chamber caused by a volume increase due to heating the water occurs against said pressure.

In this sense, patent document US 2004247447 should be mentioned, which describes an accumulator for a water installation in which the previously mentioned counter pressure is obtained with the aid of a spring.

The manufacture of this type of expansion vessels is rather complex, and requires significant investments in machinery and dies given that the expansion vessels are metal and require periodic maintenance. Complex production process such as welding are also involved, which in many cases creates problems with leaks in the welded joints. This type of vessels also requires rubber injection molds for the manufacture of the membrane.

Another added problem is that when a gas is used to carry out the counter pressure, said gas ends up being lost over time due to the permeability of the membrane, which makes periodic pressurization of the vessel necessary, usually every six months.

On the other hand, the useful volume of the traditional vessel is very small because once liquid starts to enter therein, the air chamber is reduced, increasing the pressure in said chamber exponentially and not linearly as in the case of the vessel of the invention, whereby once the swelling pressure and therefore the pressure in the water chamber as well reaches 3 bar (maximum pressure reached by heating systems), the safety valve of the water circuit is triggered to lower the pressure of the system; for this reason current expansion vessels are oversized.

### DESCRIPTION OF THE INVENTION

The expansion vessel proposed by the invention resolves in a fully satisfactory manner the drawbacks set forth above in the different aspects discussed.

To that end it is based on a new structural concept, the incorporation in the vessel of a single chamber, the water container, therefore it never loses pressure. The effect of counter pressure is carried out with the aid of a mechanical spring.

More specifically, the proposed expansion vessel is formed from a main cylinder, a plunger with its ring, two covers and a spring, the connection inlet with the closed circuit to the single chamber of the vessel being arranged in one of said covers, such that any water pressure increase in the closed circuit determines a movement of the mentioned plunger and the subsequent increase in the useful capacity of the mentioned single chamber against the spring aiding it, which spring exerts constant force.

The advantages derived from this mechanical structure of the expansion vessel can mainly be focused on the following aspects:
- It allows the vessel to be made of a plastic material, with the exception of the spring, therefore the classic rust problems disappear.
- The volume which is used is comprehensively useful, therefore the size of the vessel is reduced considerably for a certain level of features.
- It does not have a pressurized chamber, therefor it cannot lose the pressurizing gas thereof, such that its maintenance is inexistent.
- It weights much less than traditional metal, and it further occupies much less space.
- It automatically adjusts to the pressures of the circuits.
- It is much easier to manufacture and much more economical than conventional vessels.
- It is completely ecological given that it can be disassembled, unlike what occurs with conventional vessels.

If it is taken into consideration that the weight and size reduction as well as the absence of maintenance are fundamental for both manufacturers and for users, the advantages of the expansion vessel of the invention are clearly evident.

Therefore, the invention relates to an expansion vessel configured to be connected to a circuit through which a pressurized fluid circulates, to temporarily receive a certain amount of fluid from the circuit given a volume increase of the fluid generated by a temperature increase or a pressure pump, characterized in that it comprises:
a tubular body having a first cover at a connection end connected to the closed circuit, the first cover comprising a communication neck communicating with the closed circuit having a sealed coupling with the closed circuit;
a plunger configured to be moved inside said tubular body;
a spring configured to permanently push the plunger towards the first cover; to define a single chamber:
   between the inside of the tubular body, a front closing face of the plunger and the first cover;
   having a variable volume determined by a position of the plunger throughout the tubular body.

The vessel of the invention may further comprise a second cover:
opposite to the first cover;
to form a first support base for the spring;
provided with a through opening for the passage of air in plunger retraction and propulsion movements.

The plunger may comprise leak-tightness elements selected from gaskets, seals and combinations thereof between an outer perimetral face of the plunger and an inner face of the tubular body.

In the vessel of the invention, the spring can work under compression and be placed according to an axial arrangement inside the tubular body.

The plunger can comprise a cup-like recess on a rear pushing face, opposite to the front closing face, to define a second support base for the spring.

The vessel of the invention can be cylindrical, with both a circular and elliptical base, or it can have any other shape allowing the operation thereof, such as for example a square, rectangular or triangular base prism shape.

The vessel can be made of any material allowing the manufacture thereof and which also withstands the required working pressure, fluids and temperature; the vessel can be made of plastic, among others.

### DESCRIPTION OF THE DRAWINGS

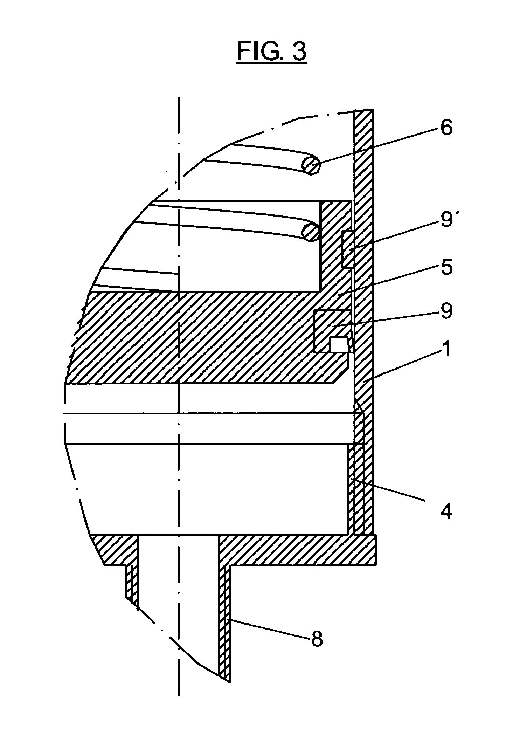

To complement the description being made and for the purpose of aiding to better understand the features of the invention according to a preferred practical embodiment thereof, a set of drawings is attached to said description as an integral part thereof in which the following has been shown with an illustrative and non-limiting character:

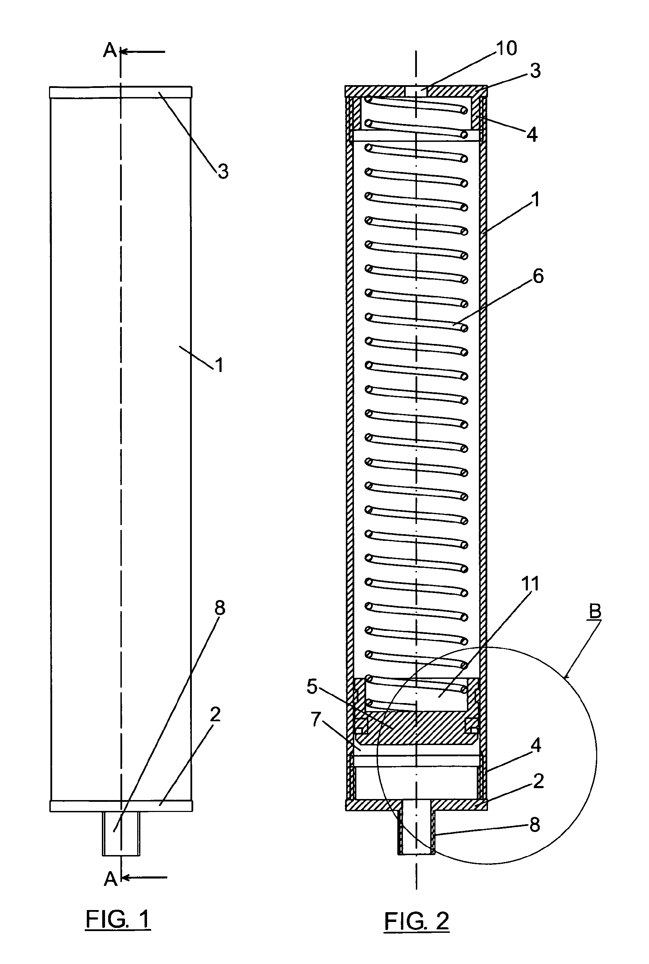

Figure 1 shows a side elevational schematic representation of a mechanical expansion vessel carried out according to the object of the present invention.
Figure 2 shows another elevational view of the same expansion vessel, now diametrically sectioned.
Finally, Figure 3 shows an enlarged detail of the previous Figure at the level of the leak-tightness means of the plunger with respect to the cylinder or sleeve containing it.

### PREFERRED EMBODIMENT OF THE INVENTION

In view of the discussed figures, it can be seen how the proposed expansion vessel is formed from a cylindrical tube (1), preferably made of a polymeric material, such as a polyamide, which is closed at its ends by means of respective covers (2) and (3), of the same nature, which can be fixed to the cylindrical body (1) by means of threading, by means of adhesive or by any other means, for which purpose they will preferably incorporate an inner neck (4) that can be coupled to the mouth of the body (1).

Arranged inside the receptacle defined by the cylindrical body (1) and the covers (2) and (3) there is a plunger (5) which permanently tends to be projected towards the cover (2) due to the effect of a spring (6) also housed inside the cylindrical body (1), said plunger defining a chamber (7) close to the cover (2), and which is maintained in permanent communication with the corresponding water circuit, such as for example a heating circuit which is not shown in the drawings, through a hollow axial neck (8) of said cover (2).

According to this structure and when the water pressure in said closed circuit is less than the pressure that the spring (6) is able to exert, the plunger (5) is located close to the cover (2), with a minimum volume for the cover (7), which volume gradually increases by means of retraction of the plunger (5) against the spring (6) as the pressure in said circuit increases, logically due to the effect of the expansion of the water due to the temperature increase of the water circulating therethrough.

Finally it must only be pointed out that the plunger (5) is supported with gaskets or seals (9-9') assuring the leak-tightness, and that the cover (3) opposite to the neck (8) will preferably be provided with an opening (10) to facilitate the removal of the air contained in the cylindrical body (1) when the plunger (5) is retracted, and then the return of the air during the opposite operation.

For proper functioning of the spring (6), the latter has a perfectly axial arrangement thanks to the shape of the cup of the cover (3) on which the plunger rests and thanks to the fact that the plunger (5) also adopts a cup shape with a housing (11) for the corresponding end of the spring (6), the diametric limit of which coincides with that of the latter.

## Claims

1. An expansion vessel configured to be connected to a circuit through which a pressurized fluid circulates for temporarily receive a certain amount of fluid from the circuit due to a volume increase of the fluid, **characterized in that** it comprises:
a tubular body (1) having a first cover (2) at a connection end connected to the closed circuit, the first cover (2) comprising a neck (8) for communicating with the closed circuit having a leak-tight coupling with the closed circuit;
a plunger (5) configured to be moved inside the tubular body (1);
a spring (6) configured to permanently push the plunger (5) towards the first cover (2);
to define a single chamber (7):
between the inside of the tubular body (1), a front closing face of the plunger (5) and the first cover (2);
having a variable volume determined by a position of the plunger (5) throughout the tubular body.

2. The vessel of claim 1, **characterized in that** it further comprises a second cover (3):
opposite to the first cover (2);
to form a first support base for the spring (6);
provided with a through opening (10) for the passage of air in plunger (5) retraction and propulsion movements.

3. The vessel of any of claims 1-2, **characterized in that** the plunger (5) comprises leak-tightness elements selected from gaskets, seals and combinations thereof (9-9'), between an outer perimetral face of the plunger (5) and an inner face of the tubular body (1).

4. The vessel of any of claims 1-3, **characterized in that** the spring (6) works under compression and is placed according to an axial arrangement inside the tubular body (1).

5. The vessel of any of claims 1-4, **characterized in that** the plunger (5) comprises a cup-like recess (11) in a rear pushing face, opposite to the front closing face, to define a second support base for the spring (6).

6. The vessel of any of claims 1-5, **characterized in that** is cylindrical.

7. The vessel of any of claims 1-6, **characterized in that** is made of a polymeric material.
